Europäisches Patentamt

European Patent Office

Office européen des brevets

(19)

(11) Numéro de publication : **0 192 081**
**B1**

(12)

# FASCICULE DE BREVET EUROPÉEN

(45) Date de publication du fascicule du brevet :
19.07.89

(51) Int. Cl.⁴ : **F 16 D 23/14**

(21) Numéro de dépôt : 86100946.2

(22) Date de dépôt : 24.01.86

(54) Dispositif de butée d'embrayage tirée.

(30) Priorité : 28.01.85 FR 8501138

(43) Date de publication de la demande :
27.08.86 Bulletin 86/35

(45) Mention de la délivrance du brevet :
19.07.89 Bulletin 89/29

(84) Etats contractants désignés :
DE GB IT SE

(56) Documents cités :
EP--A-- 0 153 087
DE--A-- 2 613 952
DE--A-- 3 113 463
FR--A-- 2 518 678
FR--A-- 2 545 172
GB--A-- 1 478 920

(73) Titulaire : SKF FRANCE
8, Avenue Réaumur
F-92142 Clamar Cédex (FR)

(72) Inventeur : Caron, Fabrice
2 Allée Arcoat
F-78180 Montigny-le-Bretonneux (FR)
Inventeur : Loizeau, Eric
21 Rue Hébert
F-92140 Clamart (FR)

(74) Mandataire : Casalonga, Axel et al
BUREAU D.A. CASALONGA OFFICE JOSSE & PETIT
Morassistrasse 8
D-8000 München 5 (DE)

EP 0 192 081 B1

Jouve, 18, rue St-Denis, 75001 Paris, France

## Description

La présente invention est relative à un dispositif de butée d'embrayage du type tirée, en particulier pour véhicule automobile. Ce type de butée travaille en traction et en contact permanent et avec la face arrière du diaphragme du dispositif débrayeur par l'intermédiaire d'une pièce annulaire dite pièce d'accostage. Le contact permanent est assuré en dehors des périodes de manœuvre du dispositif d'embrayage, grâce à une légère précontrainte axiale.

On connaît par la demande de brevet français 2 545 172 un dispositif de butée d'embrayage de ce type comportant un jonc de solidarisation engagé dans une gorge ménagée soit dans la pièce d'accostage soit dans la bague intérieure tournante de la butée à roulement. Le montage de la butée à roulement sur le mécanisme de débrayage se fait par simple encliquetage du jonc de solidarisation. Le démontage se fait en exerçant une poussée sur la butée à roulement ce qui provoque la rétraction du jonc de solidarisation après franchissement de picots solidaires de la pièce d'accostage. On retrouve une disposition comparable dans la demande de brevet allemand publiée sous le n° 31 13 463.

Ces dispositifs antérieurs présentent cependant un certain nombre d'inconvénients. En effet l'effort axial nécessaire pour l'expansion du jonc de solidarisation sur les rampes prévues à cet effet est relativement élevé et difficile à maîtriser. Il en résulte un risque de démontage irréversible en cas de manœuvre axiale intempestive. Par ailleurs, à certaines phases de la manœuvre du jonc de solidarisation, celui-ci se trouve en appui sur des arêtes vives ce qui rend très aléatoire la sécurité de fonctionnement du dispositif du fait du risque de coincement du jonc de solidarisation entre ces arêtes et les autres surfaces de contact.

Dans ces dispositifs de l'art antérieur il est également prévu d'éviter un démontage involontaire soit par des cales rapportées (demande de brevet français 2 545 172) soit par un système de fourreau ou de tiroir (demande de brevet allemand 3 113 463). Il en résulte une impossibilité de démontage sans accès préalable au dispositif de butée d'embrayage lui-même afin de rendre inopérant ces moyens avant le démontage. Il n'est donc pas possible de procéder au démontage direct « en aveugle » et sans une opération intermédiaire.

La présente invention a pour objet un dispositif de butée d'embrayage du type tirée permettant de solidariser ou de désolidariser la butée d'embrayage et la pièce d'accostage liée au diaphragme, en opérant par simple manœuvre axiale de la butée à roulement par l'intermédiaire de son organe de commande, les opérations de montage et de démontage pouvant être faites « en aveugle », la butée à roulement restant enfermée dans un carter et ce sans aucun outillage, sans risque de fausse manœuvre et sans nécessiter de démontage préalable du diaphragme ou de tout autre élément.

Le dispositif de butée d'embrayage du type tirée selon l'invention, comprend une pièce d'accostage maintenue par des moyens élastiques en contact permanent avec le diaphragme de l'embrayage, une butée à roulement pouvant coulisser axialement sur un tube-guide sous l'action d'un organe de commande et des moyens de liaison axiale coopérant avec une gorge de retenue pratiquée soit sur la pièce d'accostage soit sur un organe de la butée à roulement et permettant de solidariser par encliquetage la butée à roulement et la pièce d'accostage tout en autorisant un démontage par effacement. Selon l'invention, les moyens de liaison comprennent une cage à billes comportant une pluralité de billes, montées entre la pièce d'accostage et la butée à roulement et capables de coopérer, en position de solidarisation, avec une zone de coincement et ladite gorge de retenue, en assurant un verrouillage axial et rotatif. Lors du démontage, les billes de la cage à billes sont capables de coopérer avec une zone de dégagement. Les zones de coincement et de dégagement sont pratiquées soit sur l'organe précité de la butée à roulement soit sur la pièce d'accostage.

La cage à billes, qui peut avantageusement être réalisée en matière plastique, présente une certaine élasticité. Elle est munie d'une pluralité de logements pour les billes, chaque logement présentant de préférence des dimensions axiales supérieures au diamètre des billes. De cette manière, les billes peuvent se déplacer axialement par rapport à la cage à billes lors des opérations de montage et de démontage.

Chaque logement de la cage à billes comprend deux pattes élastiques de maintien pour la bille correspondante, tendant à placer la bille de manière que le diamètre primitif de l'ensemble des billes corresponde à la position de solidarisation, c'est-à-dire à la position de fonctionnement du dispositif de butée d'embrayage.

Des moyens de blocage axial de la cage à billes lors du démontage sont en outre prévus, les billes coopérant alors avec la zone de dégagement précitée.

La cage à billes présente en outre de préférence une zone périphérique chanfreinée permettant d'assurer un précentrage de la cage à billes lors du montage.

Chaque zone de coincement pour les billes est constituée par un premier alvéole obtenu de préférence par usinage sans enlèvement de copeaux, ayant, dans un plan radial, un rayon de courbure supérieur à celui des billes de la cage à billes de façon à réaliser le coincement et la solidarisation désirés. Chaque zone de dégagement est constituée quant à elle par un deuxième alvéole obtenu également de préférence par usinage sans enlèvement de copeaux et débouchant dans le premier alvéole. Le deuxième alvéole présente un creux supérieur à celui du premier alvéole, permettant ainsi de réaliser la zone de dégagement pour les billes.

Des moyens élastiques de butée axiale sont également prévus afin de limiter temporairement le déplacement axial relatif de la butée à roulement et de la pièce d'accostage lors du montage en faisant apparaître un point dur afin de permettre aux billes de la cage à billes d'assurer la solidarisation effective après encliquetage.

Selon un premier mode de réalisation préféré du dispositif de butée d'embrayage de l'invention, les zones de coincement et de dégagement sont pratiquées à la périphérie interne d'une partie de la bague intérieure de la butée à roulement. La gorge de retenue est pratiquée à la périphérie externe de la pièce d'accostage. La périphérie externe de la pièce d'accostage présente en outre une gorge de dégagement pour l'effacement des billes lors de l'opération de démontage.

Dans ce mode de réalisation, la cage à billes présente un ou plusieurs bourrelets périphériques jouant le rôle de blocage axial de la cage en coopérant avec la gorge de retenue de la pièce d'accostage lors de l'opération de démontage. La cage à billes présente en outre avantageusement un rebord d'appui axial coopérant avec l'extrémité de la bague intérieure de la butée à roulement.

Dans un deuxième mode de réalisation, les zones de coincement et de dégagement sont au contraire pratiquées à la périphérie interne de la pièce d'accostage et la gorge de retenue est alors pratiquée à la périphérie externe d'une partie de la bague intérieure de la butée à roulement.

Dans ce mode de réalisation, la cage à billes présente simplement un rebord d'appui axial coopérant avec l'extrémité de la pièce d'accostage.

Toujours dans ce mode de réalisation, il est prévu une pièce de verrouillage axial de la cage à billes, fixée à l'extrémité de la pièce d'accostage. Cette pièce de verrouillage peut occuper deux positions axiales. Dans une première position, la cage à billes peut se déplacer jusqu'à sa position de solidarisation. Dans une deuxième position, les billes de la cage à billes peuvent coopérer avec leur zone de dégagement. La pièce de verrouillage axial de la cage à billes, est avantageusement fixée par encliquetage élastique sur la pièce d'accostage, pouvant passer de la première à la deuxième position par simple poussée axiale sur la butée à roulement.

Dans un mode de réalisation préféré, la pièce de verrouillage axial de la cage à billes fait partie intégrante des moyens élastiques de maintien de la pièce d'accostage qui comprennent une rondelle bombée munie d'une pluralité de pattes qui constituent ladite pièce de verrouillage axiale.

La présente invention a également pour objet un ensemble butée à roulement — cage à billes ou pièce d'accostage — cage à billes, qui permette la réalisation, après montage sur une pièce complémentaire, d'un dispositif de butée d'embrayage.

La présente invention a également pour objet un procédé de mise en place et de démontage, en aveugle, d'un dispositif de butée d'embrayage.

L'invention sera maintenant décrite de manière plus précise sur la base de deux modes de réalisation particuliers pris à titre d'exemples nullement limitatifs et illustrés par les dessins annexés sur lesquels :

la figure 1 est une vue en coupe d'un premier mode de réalisation d'un dispositif d'embrayage selon l'invention ;

la figure 2 est une vue partielle de côté de la cage à billes du dispositif illustré sur la figure 1 ;

les figures 3 et 4 sont des vues partielles en coupe selon III-III et IV-IV de la figure 2 ;

la figure 5 est une vue agrandie partielle en coupe montrant schématiquement l'une des billes de la cage à billes ainsi que la forme des alvéoles ;

la figure 6 est une vue en coupe selon VI-VI de la figure 5 ;

la figure 7 est une vue de dessus selon la flèche F de la figure 5 montrant également la forme des alvéoles ;

les figures 8a à 8d sont des vues partielles en coupe illustrant schématiquement les opérations de montage lors de la mise en place du dispositif de butée d'embrayage illustré sur la figure 1 ;

les figures 9a à 9d sont des vues en coupe schématiques montrant les différentes positions lors du démontage du dispositif de butée d'embrayage illustré sur la figure 1 ;

la figure 10 est une vue en coupe d'un deuxième mode de réalisation d'un dispositif de butée d'embrayage selon l'invention ;

les figures 11a à 11d illustrent schématiquement les différentes positions lors de la mise en place d'un dispositif d'embrayage tel qu'illustré sur la figure 10 ;

les figures 12a à 12d illustrent de la même manière les différentes positions lors du démontage d'un tel dispositif de butée d'embrayage ; et

la figure 13 est une vue en coupe d'un troisième mode de réalisation d'un dispositif de butée ·d'embrayage selon l'invention.

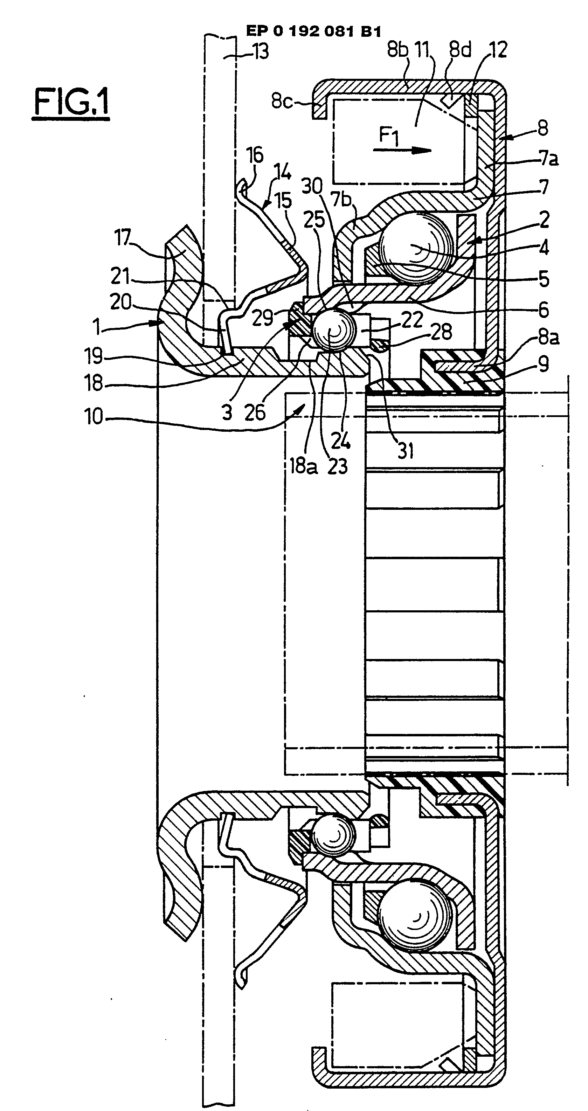

Tel qu'il est illustré sur la figure 1 le dispositif d'embrayage selon l'invention comprend une pièce d'accostage 1, une butée à roulement 2 et une cage à billes 3 disposée entre la pièce d'accostage 1 et la butée à roulement 2.

La butée à roulement 2 comprend de manière classique une pluralité de billes 4 maintenues par une cage 5 et capables de rouler sur les chemins de roulement respectifs d'une bague intérieure tournante 6 et d'une bague extérieure fixe 7 réalisées ici par emboutissage.

La bague extérieure 7 comporte une collerette radiale 7a en contact de frottement avec une pièce de liaison 8 qui est rendue solidaire par son extrémité 8a d'un manchon de guidage 9 entourant un tube-guide 10. La pièce de liaison 8 comporte également deux oreilles 8b diamétralement opposées. L'organe de commande de la butée d'embrayage représenté schématiquement en 11 vient s'insérer entre la partie annulaire 7a de la bague extérieure 7 et les retours d'oreilles 8c des oreilles 8b.

Le contact de frottement contre la partie annulaire 7a et la pièce de maintien 8 est assuré par l'intermédiaire d'un anneau élastique 12 et d'une patte de retour 8d solidaire de la pièce de maintien 8. Un certain déplacement radial de la butée à roulement 2 est autorisé permettant un autocentrage de cette dernière de manière classique.

Dans ce mode de réalisation de butée d'embrayage, il existe une précontrainte axiale permanente dans le sens de la flèche $F_1$ sur la figure 1 entre la butée à roulement 2 et la pièce d'accostage 1. Cette précontrainte est réalisée par l'intermédiaire de l'organe de commande 11.

La pièce d'accostage 1 est fixée initialement sur le diaphragme 13 du mécanisme de débrayage, faisant par exemple partie d'une transmission de véhicule automobile. La fixation de la pièce d'accostage 1 se fait par l'intermédiaire d'un organe élastique 14 comportant une partie bombée annulaire 15 et une pluralité de pattes d'appui 16 qui viennent en contact avec l'une des faces du diaphragme 13. La pièce d'accostage 1 comporte quant à elle une collerette sensiblement radiale 17 venant en appui par une surface convexe avec la face opposée du diaphragme 13. La pièce d'accostage 1 comporte en outre un manchon annulaire 18 présentant une rainure externe 19 qui reçoit des pattes d'encliquetage 20 solidaires de l'organe élastique 14. La fixation de la pièce d'accostage 1 se fait donc par serrage élastique par l'intermédiaire de l'organe 14, les doigts du diaphragme 13 se trouvant pincés entre la collerette d'appui 17 de la pièce d'accostage 1 et l'organe élastique de liaison 14. Le précentrage de l'axe de la pièce d'accostage 1 par rapport à l'axe de rotation du diaphragme 13 se fait par un ajustement avec jeu approprié entre d'une part l'alésage des doigts du diaphragme 13 et le diamètre du manchon 18 de la pièce d'accostage 1 et d'autre part l'alésage des doigts du diaphragme 13 et une portion cylindrique 21 de l'organe élastique 14.

La cage à billes 3 qui constitue un moyen de liaison axial entre la pièce d'accostage 1 et la bague tournante intérieure 6 de la butée à roulement 2 est de préférence réalisée en matière plastique douée d'une certaine élasticité. Elle présente une pluralité de logements 22 pour des billes 23. Chaque bille 23 vient, en position de fonctionnement, coopérer avec une gorge de retenue 24 pratiquée sur la périphérie externe du manchon 18 de la pièce d'accostage 1 et d'autre part avec un alvéole de coincement 25 pratiqué à la périphérie interne d'un prolongement axial de la bague intérieure tournante 6. Le manchon 18 de la pièce d'accostage 1 comporte en outre sur sa face périphérique externe une gorge de dégagement 18a permettant, comme on le verra, l'effacement des billes 23 lors du démontage.

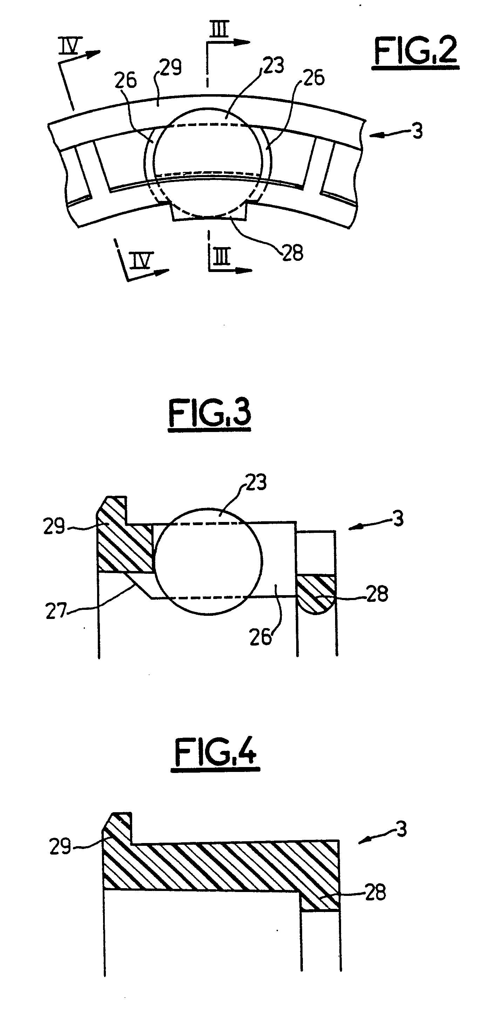

Si on se rapporte aux figures 2 à 4 on voit que les logements 22 de la cage à billes 3 présentent des dimensions axiales supérieures au diamètre des billes 23 ce qui permet à ces dernières de se déplacer axialement à l'intérieur de la cage 3. Chaque logement 22 de la cage à billes 3 comprend deux pattes élastiques de maintien 26 enserrant de chaque côté les billes 23 sur toute la longueur axiale du logement 22 assurant ainsi le maintien par coincement des billes 23. Ces dernières peuvent toutefois se déplacer radialement dans leur logement 22 grâce à l'élasticité des pattes de maintien 26. Dans la position normale des billes 23, illustrée sur les figures 2 et 3, le diamètre primitif de la couronne de billes 23 de la cage 3 est calculé pour coïncider avec le diamètre primitif de fonctionnement de la couronne de billes après accostage et sous précontrainte axiale comme illustré sur la figure 1.

Pour faciliter le montage et assurer un précentrage de la cage à billes 3 lors de cette opération, les pattes élastiques 26 présentent une zone chanfreinée 27.

La cage à billes 3 présente en outre plusieurs bourrelets périphériques 28 capables de jouer un rôle de blocage axial de la cage en coopérant avec la gorge de retenue 24 de la pièce d'accostage 1 lors du démontage. Un rebord d'appui 29 placé à l'opposé des bourrelets 28 coopère avec l'extrémité de la bague intérieure 6 de la butée à roulement 2.

Il y a lieu de noter qu'avant le montage, la cage à billes 3 se trouve montée à l'intérieur de la bague intérieure 6 qui constitue une pièce porteuse. La cage à billes ainsi montée dans sa pièce porteuse reste solidaire de celle-ci tout en gardant une possibilité de déplacement axial limité d'une part par le rebord d'appui axial 29 et d'autre part par le contact entre les billes 23 et l'alvéole 25.

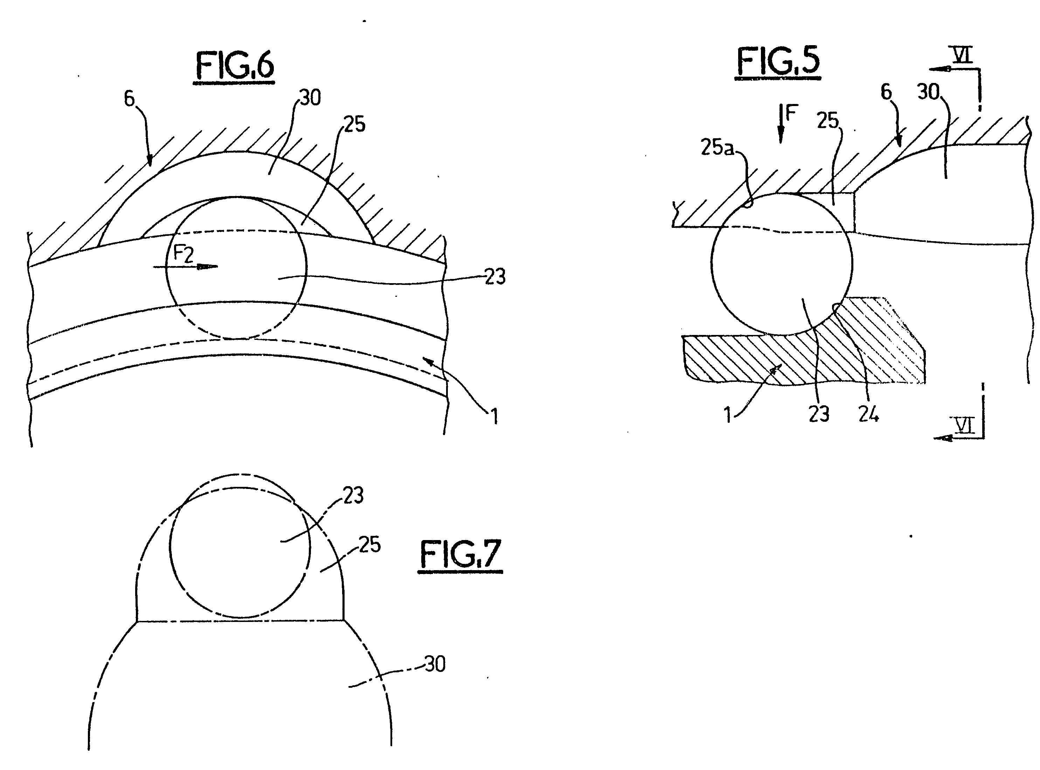

En se reportant aux figures 5 à 7 qui représentent schématiquement une des billes 23, la cage à billes 3 ayant été supprimée pour clarifier les explications, on voit que le coincement de la bille 23 est obtenu par l'alvéole de coincement 25 réalisé par usinage sans enlèvement de copeaux dans la bague intérieure 6. L'alvéole de coincement 25 présente, dans un plan radial, un profil cylindrique ayant un rayon de courbure supérieur à celui de la bille 23, comme on peut le voir sur la figure 6. Dans ces conditions, la bille 23 coopérant avec l'alvéole de coincement 25 réalise également une solidarisation de la pièce d'accostage 1 et de la bague intérieure tournante 6 dans le sens de la rotation par exemple dans le sens de la flèche F2 sur la figure 6. Dans un plan axial, comme on peut le voir sur la figure 5, l'alvéole de coincement 25 présente approximativement les dimensions du diamètre de la bille 23 avec une portion d'extrémité sphérique 25a qui assure le coincement de la bille 23 entre ladite portion 25a et la gorge de retenue 24 de profil torique.

Il apparaît donc que l'ensemble des billes 23 de la cage à billes 3 est capable, grâce aux alvéoles de coincement 25 d'assurer une solidarisation à la fois en direction axiale et en rotation de la pièce d'accostage 1 et de la butée à roulement 2.

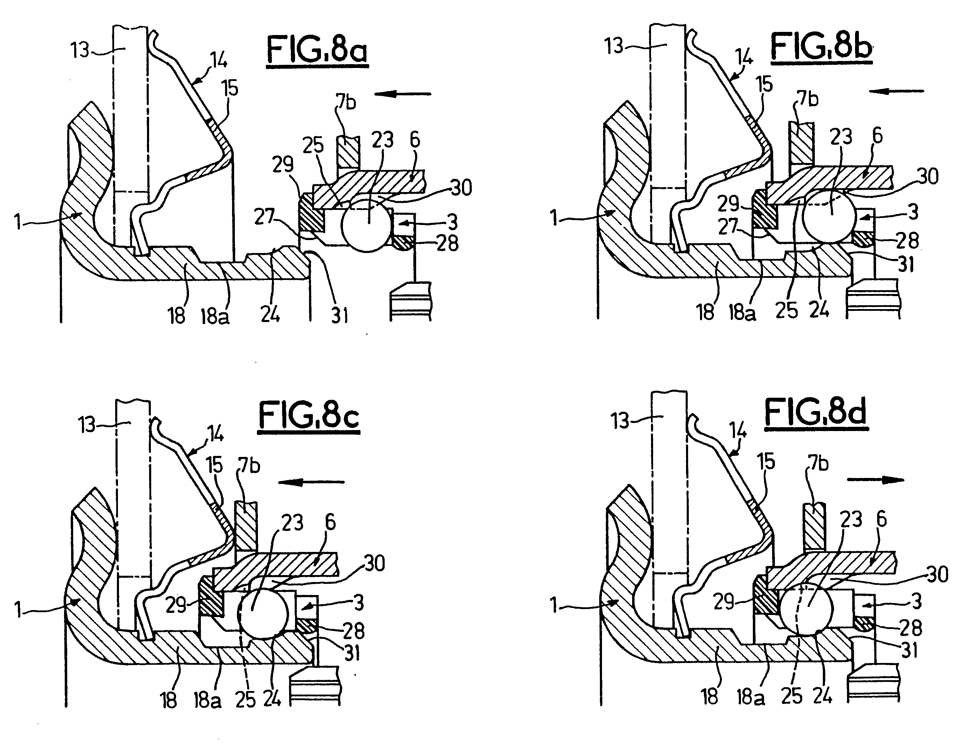

Un deuxième alvéole de dégagement 30 obtenu par usinage sans enlèvement de copeaux, par exemple par emboutissage, est également pratiqué à la périphérie interne de la bague intérieure 6. Cet alvéole 30 présente radialement des dimensions supérieures à celles de l'alvéole 25 de sorte que les billes 23 puissent, en pénétrant dans l'alvéole 30, se dégager de la gorge de retenue 24. L'alvéole 30 débouche dans l'alvéole 25 comme on peut le voir sur la figure 7.

On va maintenant décrire en référence aux figures 8a et 8d l'opération de mise en place en aveugle d'un dispositif de butée d'embrayage tel qu'illustré sur la figure 1. Sur ces figures schématiques les pièces identiques portent les mêmes références que sur les figures précédentes. Comme on peut le noter sur la figure 8a, la cage à billes 3 se trouve initialement montée dans l'alésage de la bague intérieure 6 de la butée à roulement 2 qui n'est pas représentée complètement afin de simplifier les dessins. Dans cette position initiale, la pièce d'accostage 1 est solidaire du diaphragme 13 qui est pincé au moyen de l'organe élastique 14. Le mouvement axial de l'ensemble formé par la butée à roulement 2 et la cage à billes 3 est obtenu par manœuvre de la butée à roulement 2 vers le diaphragme 13 par action de l'organe de commande 11 visible sur la figure 1. Les chanfreins 27 des pattes élastiques 26 permet d'assurer le précentrage lorsqu'elles viennent en contact avec l'extrémité également chanfreinée 31 du manchon 18 de la pièce d'accostage 1.

Dans la position suivante, illustrée sur la figure 8b, les billes 23 qui sont entrées en contact avec la pente chanfreinée 31 s'écartent radialement en venant se placer dans l'alvéole de dégagement 30 ce mouvement des billes 23 est rendu possible grâce à l'élasticité des pattes 26 qui continuent de maintenir les billes 23. Dans cette position, on notera que les billes 23 se trouvent en contact avec les bourrelets de verrouillage 28 qui limitent leur déplacement à l'intérieur des logements 22 de la cage à billes 3. Cette dernière est entraînée axialement par la bague intérieure 6 grâce à l'existence du rebord d'appui axial 29.

Le mouvement de déplacement axial de la butée de roulement 2 est poursuivi jusqu'à la position illustrée sur la figure 8c où l'opérateur perçoit un point dur. Dans cette position en effet, la portion radiale de retour 7b de la bague extérieure 7 de la butée à roulement 2 vient en contact avec la portion bombée 15 de l'organe élastique 14. Ce point dur ayant été atteint, l'opérateur exerce sur la butée à roulement par l'intermédiaire de son organe de commande 11, une traction axiale en l'éloignant du diaphragme 13. On notera que dans la position extrême illustrée sur la figure 8c, les billes 23, n'ont pas encore pénétré dans les alvéoles de coincement 25 et restent en contact avec la surface périphérique externe du manchon 18 sans pouvoir pénétrer dans la gorge de dégagement 18a.

La poursuite de la traction axiale place finalement l'ensemble du dispositif dans la position illustrée sur la figure 8d qui est également la position finale illustrée sur la figure 1 dans laquelle les billes 23 se trouvent coincées entre l'alvéole de coincement 25 et la gorge de retenue 24. L'application de la précharge axiale dans le sens du débrayage c'est-à-dire dans le sens de la flèche $F_1$ sur la figure 1 maintient les billes 23 dans cette position définitive de fonctionnement.

Les figures 9a à 9d illustrent les opérations permettant le démontage du dispositif de butée d'embrayage, démontage qui se fait en aveugle comme c'est le cas de la mise en place qui vient d'être expliquée.

L'opérateur exerce tout d'abord une poussée axiale sur la butée à roulement 2 en agissant par son organe de commande 11 de façon à rapprocher la butée à roulement 2 du diaphragme 13 jusqu'à l'apparition du point dur correspondant au contact entre la portion 7b de la bague extérieure 7 et la partie bombée 15. Cette position, illustrée sur la figure 9a, correspond à celle illustrée sur la figure 8c.

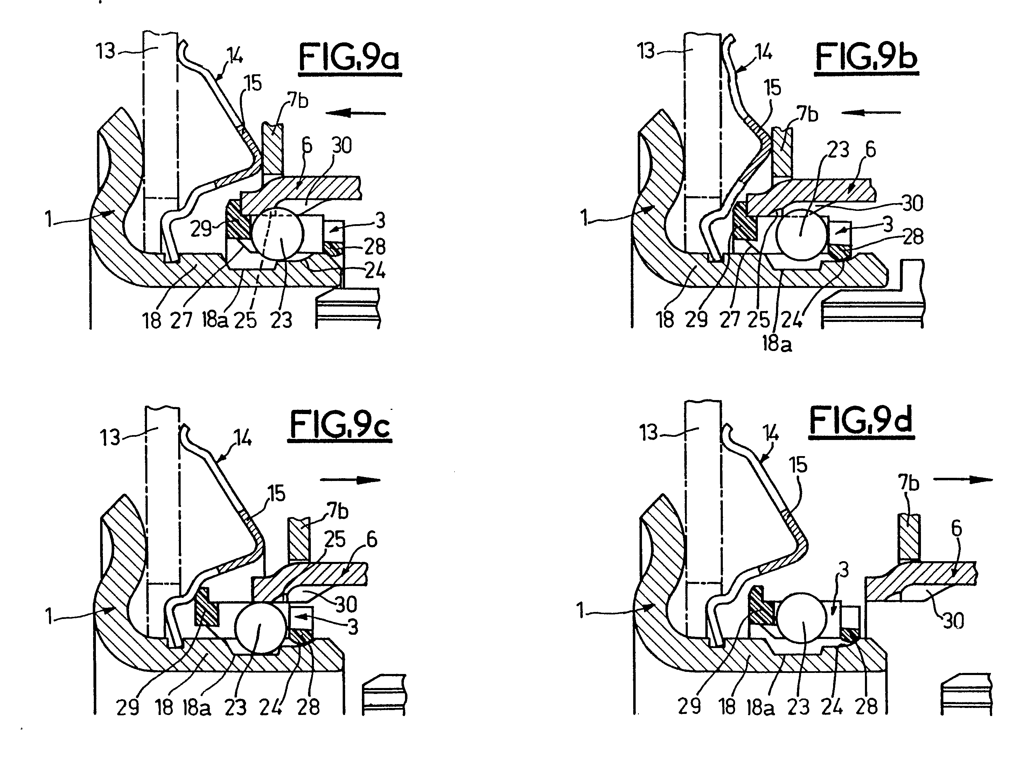

L'opérateur poursuit son action en passant au-delà de ce point dur ce qui provoque une déformation élastique de l'organe 14 comme illustré sur la figure 9b. Dans ce mouvement, les bourrelets de verrouillage 28 de la cage à billes 3 passent au-dessus du bord extrême de la gorge de retenue 24 grâce aux caractéristiques d'élasticité de la cage 3. Les bourrelets de verrouillage 28 viennent coopérer avec la gorge de retenue 24. Les billes 23 ont quitté la gorge de retenue 24 et elles peuvent s'effacer dans la gorge de dégagement 18a. Elles se trouvent par ailleurs en regard de l'alvéole de dégagement 30.

L'opérateur peut alors exercer à nouveau une traction axiale sur la butée à roulement 2 illustrée sur la figure 9c. La cage à billes 3 reste bloquée sur la pièce d'accostage 1 par l'action des bourrelets de verrouillage axial 28 qui coopèrent avec la gorge de retenue 24. Les billes 23 en s'effaçant dans la gorge de dégagement 18a autorisent le passage de la partie extrême de la bague intérieure 6 au-delà de l'alvéole de coincement 25.

La poursuite de la traction est illustrée sur la figure 9b, où la butée à roulement 2 se trouve finalement complètement désolidarisée de la cage à billes 3 qui reste logée autour du manchon 18 de la pièce d'accostage 1 fixée sur le diaphragme 13.

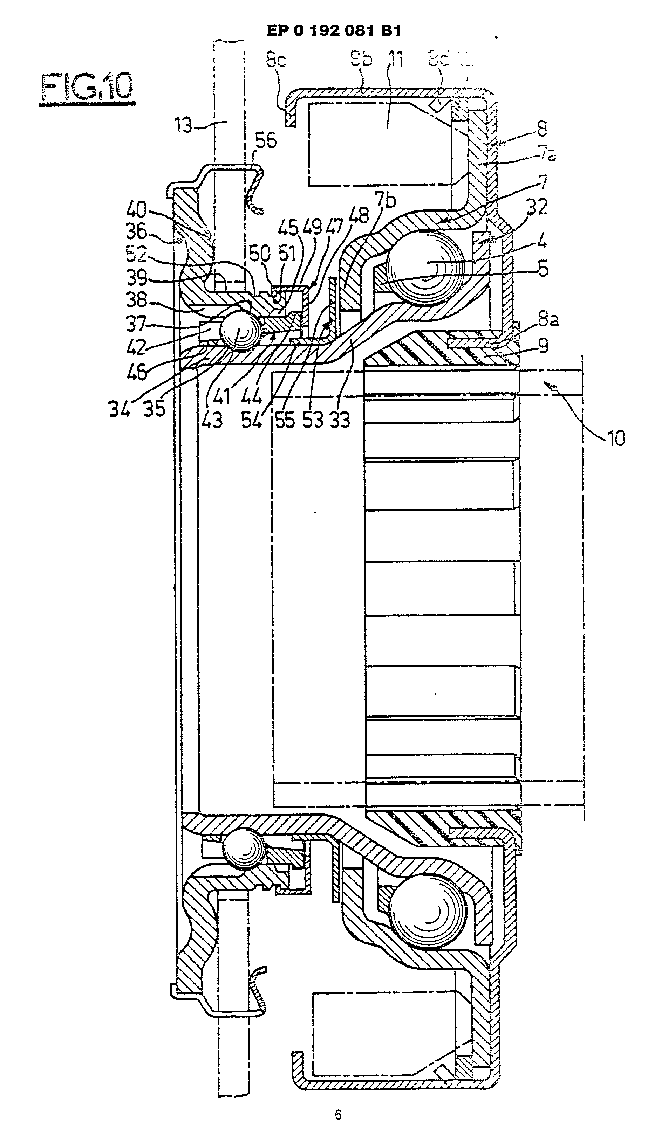

Le mode de réalisation illustré sur la figure 10 se différencie du mode de réalisation illustré sur la figure 1 par le fait que la cage à billes est logée initialement dans l'alésage de la pièce d'accostage ainsi que par les moyens de verrouillage axial de la cage à billes. Les pièces identiques sur cette figure portent les mêmes références. La butée à roulement 32 se différencie de la butée à roulement 2 par le fait que sa bague intérieure tournante 33 comporte une prolongation 34 sous la forme d'un manchon axial dont la périphérie externe présente la gorge de retenue 35 qui joue le même rôle que la gorge de retenue 24 du mode de réalisation illustré sur la figure 1.

La pièce d'accostage 36 se différencie de la pièce d'accostage 1 par le fait que sa périphérie interne présente un alvéole de coincement 37 et un alvéole de dégagement 38 réalisés par usinage sans enlèvement de copeaux dans un manchon axial 39 prolongeant la collerette d'appui 40 de la pièce d'accostage 36. Les alvéoles 37 et 38 ont la même structure et la même fonction que les alvéoles 25 et 30 du mode de réalisation précédent.

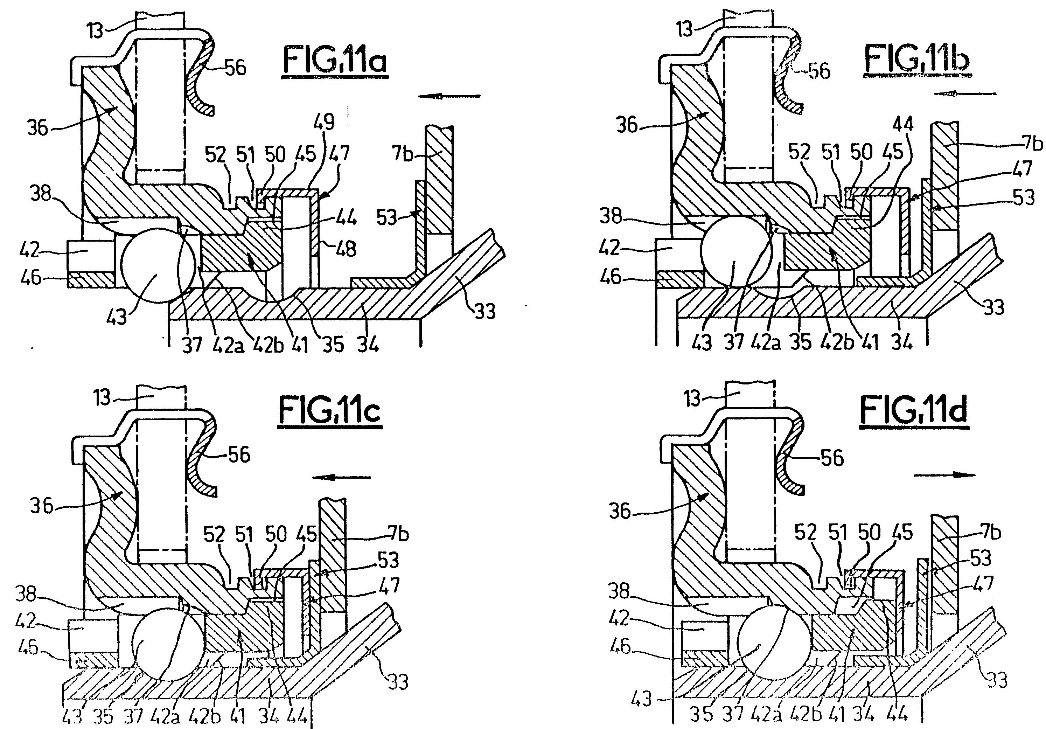

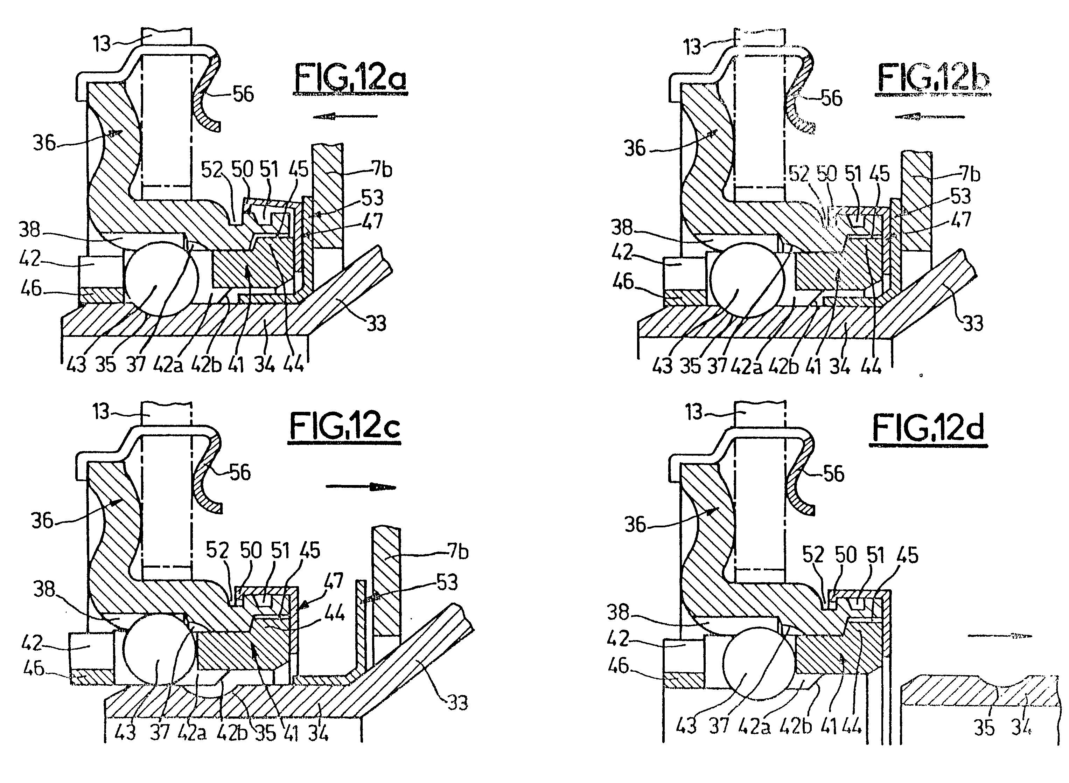

La cage à billes 41 est de structure analogue à la cage à billes 3. Elle présente également des logements 42 pour les billes 43 de dimensions axiales légèrement supérieures au diamètre des billes 43 et munis de pattes élastiques de maintien 42a enserrant les billes 43, visibles sur les figures 11 et 12 permettant, comme dans le cas précédent, un déplacement radial élastique des billes 43 dans leur logement 42. La cage à billes 41 présente en outre un rebord d'appui axial 44 capable de coopérer avec une gorge annulaire 45 pratiquée dans l'alésage de la pièce d'accostage 36 à l'extrémité du manchon axial 39. On notera que dans ce mode de réalisation, la face extrême 46 à l'opposé du rebord 44 de la cage à bille 41 est dénuée de bourrelet de verrouillage.

Une pièce de verrouillage axial 47 se présentant sur la figure 10 sous la forme d'une coupelle munie d'un bord radial 48 et d'un bord axial 49 composé d'une pluralité de pattes est fixée à l'extrémité de la pièce d'accostage 36 par l'intermédiaire d'ergots 50 chaque ergot 50 prolongeant l'une des pattes du bord 49. La pièce de verrouillage axial 47 peut être également réalisée sous la forme d'une rondelle fendue auquel cas la portion 48 est remplacée par une pluralité de pattes radiales.

Les ergots 50 de la collerette 47 peuvent coopérer avec une première gorge d'encliquetage 51 ou avec une deuxième gorge 52 toutes deux pratiquées à la périphérie externe du manchon 39 de la pièce d'accostage 36. Dans la position illustrée sur la figure 10 qui correspond à la position de fonctionnement normale du dispositif de butée d'embrayage, les ergots 50 sont logés dans la première gorge 51 proche de l'extrémité du manchon 39. Dans cette position, grâce aux dimensions axiales de la portion 49 de la collerette 47, la portion 48 se trouve éloignée de la face frontale extrême du manchon 39 et autorise ainsi un déplacement axial de la cage à billes 41. La position de la deuxième gorge 52 est telle que la portion 48 se trouve au contraire en contact avec la face frontale extrême du manchon 39 lorsque les ergots 50 de la coupelle 47 son encliquetés dans ladite gorge 52. Dans cette position, la portion 48 de la coupelle 47 oblige la cage à billes 41 contre la face externe de laquelle elle entre en contact à se déplacer jusqu'à ce que le rebord d'appui 44 se trouve logé dans la gorge 45 de la pièce d'accostage 36.

Une pièce de butée 53 de section droite en forme de L est en outre montée sur la périphérie extérieure du manchon 34 de la bague intérieure 33 de la butée 32. La pièce de butée 53 comporte une portion axiale 54 permettant son montage autour du manchon 34 et une portion radiale 55 qui est capable d'entrer en contact avec la portion 48 de la coupelle de verrouillage 47 de façon à définir un point dur lors du montage.

Le dispositif de butée d'embrayage illustré sur la figure 10 se complète par un organe élastique 56 qui vient prendre appui d'un côté sur l'une des faces du diaphragme 13 et de l'autre côté au bord extrême de la coupelle d'appui 40 de la pièce d'accostage 36. L'organe élastique 56 assure ainsi la fixation élastique par pincement de la pièce d'accostage 36 en contact avec le diaphragme 13.

On se reportera maintenant aux figures 11a à 11d qui illustrent l'opération de mise en place en aveugle du dispositif de butée d'embrayage illustré sur la figure 10.

Comme on peut le voir sur la figure 11a, la cage à billes 41 se trouve initialement montée dans l'alésage de la pièce d'accostage 36 qui est solidaire du diaphragme 13 au moyen de l'organe élastique 56. Le mouvement axial de la butée à roulement 2 sous l'action de l'organe de manœuvre 11 visible sur la figure 10 en direction du diaphragme 13 est illustré sur la figure 11a. Les chanfreins 42b des pattes élastiques 42a maintenant les billes 43 assurent comme précédemment un précentrage lorsqu'elles viennent en contact avec l'extrémité également chanfreinée du manchon 34 de la bague intérieure 33. Les billes 43 entrent également en contact avec cette portion chanfreinée. Elles peuvent se déplacer radialement vers l'extérieur vers l'alvéole de dégagement 38.

La poursuite de ce mouvement de poussée sur la butée à roulement 32 est illustrée sur la figure 11b où l'on voit que les billes 43 roulent sur l'extrémité du manchon 34 en restant dans l'alvéole 38. On notera en outre que pendant ces opérations, la cage à billes 41 est maintenue verrouillée axialement par rapport à la pièce d'accostage 36 par son rebord d'appui 44 qui se trouve dans la gorge 45. La pièce de verrouillage axial 47 se trouve dans sa première position dans laquelle les ergots 50 coopèrent avec la première gorge 51 laissant ainsi une liberté de déplacement axial pour la cage à billes 41.

La figure 11c illustre la position suivante dans laquelle les billes 43 ont pénétré dans la gorge de retenue 35 sous l'action de leurs pattes élastiques de maintien. Un point dur est apparu pour l'opérateur en raison du contact entre la collerette 47 et la pièce de butée 53. L'opérateur comprend ainsi que le montage du dispositif de butée d'embrayage est terminé. Il exerce alors une traction sur la butée à roulement 32 et met cette dernière sous précontrainte, l'ensemble prenant alors la configuration illustrée sur la figure 11d qui est identique à la figure 10. Ce mouvement de traction exercé sur la butée à roulement 32 a entraîné un déplacement de la cage à billes dont les billes 43 étaient bloquées par la gorge de retenue 35. Dans leur déplacement avec la butée à roulement 32, les billes 43 sont venues coopérer avec les alvéoles de coincement 37. La cage à billes 41 s'est déplacée axialement, sa face extrême venant en contact avec la coupelle 47 et le rebord 44 quittant la gorge 45.

Les figures 12a à 12d illustrent les opérations permettant le démontage du dispositif de butée d'embrayage en aveugle.

L'opérateur exerce tout d'abord une poussée axiale sur la butée à roulement 32 en agissant sur son organe de commande 11 de façon à rapprocher la butée à roulement 32 du diaphragme 13 jusqu'à l'apparition du point dur correspondant au contact entre la pièce de butée 53 et la collerette 47. L'opérateur poursuit son action en passant au-delà de ce point dur, ce qui provoque la déformation élastique des pattes du bord 49 de la pièce 47 dont les ergots 50 sortent de la gorge 51 jusqu'à se trouver encliquetés dans la deuxième gorge 52. Le passage de la première gorge 51 à la deuxième gorge 52 est illustré sur la figure 12a. On voit en outre sur cette figure que la poussée de la butée à roulement 32 entraîne les billes 43 et la cage à billes 41 grâce à la gorge de retenue 35, le rebord d'appui 44 pénétrant progressivement dans la gorge 45.

La position finale du mouvement de poussée est illustrée sur la figure 12b où l'on voit que les ergots 50 ont pénétré dans la deuxième gorge 52 tandis que le rebord 44 est complètement inséré dans la gorge 45. Les billes 43, toujours maintenues dans la gorge de retenue 35, se trouvent de ce fait en regard de l'alvéole de dégagement 38.

L'opérateur détectant l'impossibilité de poursuivre le mouvement de poussée, exerce alors une traction sur la butée à roulement 32 dépassant celle-ci comme illustré sur la figure 12c. Les billes 43 peuvent se déplacer radialement vers l'extérieur jusque dans l'alvéole de dégagement 38 en roulant sur la périphérie externe du manchon 34 tout en restant élastiquement maintenues dans les pattes 42a. La cage à billes 41 est maintenue verrouillée axialement sur la pièce d'accostage 36 par la coupelle 47.

La figure 12d illustre la position finale dans laquelle la butée à roulement 32 a été complètement démontée. La cage à billes 41 reste logée dans l'alésage de la pièce d'accostage 36 fixée sur le diaphragme 13.

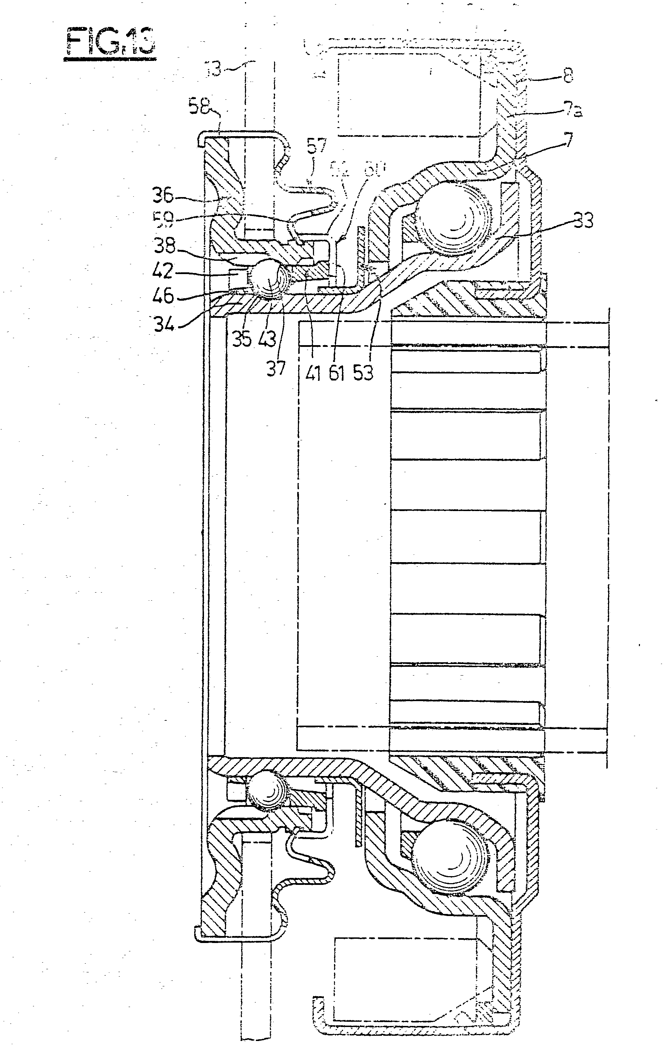

Le mode de réalisation illustré sur la figure 13 se différencie du mode de réalisation illustré sur la figure 10 uniquement par la structure de l'organe de verrouillage élastique de la pièce d'accostage 36. Sur cette figure les pièces identiques portent les mêmes références que sur les figures précédentes. Dans ce mode de réalisation, l'organe élastique de maintien 57 est une rondelle bombée à ondulations élastiques présentant des pattes d'accrochage 58 qui passent entre les doigts du diaphragme 13 afin d'assurer le pincement de la pièce d'accostage 36. La rondelle 57 comporte également des pattes d'encliquetage 59 qui peuvent coopérer avec la première gorge 51 ou avec la deuxième gorge 52 comme c'était le cas pour la coupelle 47 du mode de réalisation de la figure 10. La rondelle 57 se prolonge par un organe 60 constitué d'une pluralité de pattes munies chacune d'une portion radiale 61 et d'une portion axiale 62 et assurant, par les portions radiales 61, la même fonction de verrouillage axial de la cage à billes que la pièce 47 illustrée sur la figure 10.

Le dispositif de butée d'embrayage selon l'invention permet comme on l'a vu d'effectuer de manière simple le montage et le démontage de la butée à roulement en aveugle. Par ailleurs, le dispositif de l'invention présente une très grande sécurité d'utilisation grâce à un encliquetage à billes. Un tel dispositif ne nécessite qu'un très faible effort axial d'encliquetage. L'apparition d'un point dur lors de la mise en place marque de manière précise l'arrêt de la manœuvre d'accostage. Enfin, la structure du dispositif d'encliquetage à billes élimine tout risque de coincement lors des manœuvres de montage et de démontage.

**Revendications**

1. Dispositif de butée d'embrayage du type tirée, comprenant une pièce d'accostage (1, 36) maintenue par des moyens élastiques en contact permanent avec le diaphragme (13) de l'embrayage, une butée à roulement (2, 32) pouvant coulisser axialement sur un tube-guide (10) sous l'action d'un organe de commande (11) et des moyens de liaison axiale coopérant avec une gorge de retenue (24, 35) pratiquée soit sur la pièce d'accostage soit sur un organe de la butée à roulement, permettant de solidariser par encliquetage la butée à roulement et la pièce d'accostage tout en autorisant un démontage par effacement, caractérisé par le fait que les moyens de liaison comprennent une cage à billes (3) et une pluralité de billes (23, 43) montées entre la pièce d'accostage et la butée à roulement, capables de coopérer, en position de solidarisation, avec une zone de coincement (25, 37) et ladite gorge de retenue (24, 35) en assurant un verrouillage axial et, lors du démontage, avec une zone de dégagement (30, 38), lesdites zones de coincement et de dégagement étant pratiquées soit sur ledit organe de la butée à roulement soit sur la pièce d'accostage.

2. Dispositif de butée d'embrayage selon la revendication 1, caractérisé par le fait que la cage à billes (3) présente une pluralité de logements (22, 42) pour les billes (23, 43), chaque logement présentant des dimensions axiales supérieures au diamètre des billes.

3. Dispositif de butée d'embrayage selon la revendication 2, caractérisé par le fait que chaque logement de la cage à billes comprend deux pattes élastiques de maintien (26, 42a) pour la bille correspondante, tendant à placer la bille de manière que le diamètre primitif de l'ensemble des billes corresponde à la position de solidarisation.

4. Dispositif de butée d'embrayage selon l'une quelconque des revendications précédentes, caractérisé par le fait qu'il comprend des moyens de blocage (15) axial de la cage à billes lors du démontage, les billes coopérant avec la zone de dégagement (30, 38) précitée.

5. Dispositif de butée d'embrayage selon l'une quelconque des revendications précédentes, caractérisé par le fait que la cage à billes présente une zone périphérique chanfreinée (27) permettant le précentrage de la cage à billes lors du montage.

6. Dispositif de butée d'embrayage selon l'une quelconque des revendications précédentes, caractérisé par le fait que chaque zone de coincement (25, 37) est constituée par un premier alvéole de coincement obtenu par usinage sans enlèvement de copeaux, ayant un rayon de courbure dans un plan radial supérieur à celui des billes de la cage à billes, chaque zone de dégagement (30, 38) étant constituée par un deuxième alvéole de dégagement obtenu par usinage sans enlèvement de copeaux, débouchant dans le premier alvéole et présentant un creux supérieur à celui de ce dernier.

7. Dispositif de butée d'embrayage selon l'une quelconque des revendications 1 à 6, caractérisé par le fait qu'il comprend des moyens élastiques de butée axiale (15) pour limiter le déplacement axial relatif de la butée à roulement et de la pièce d'accostage lors du montage afin de permettre aux billes d'assurer la solidarisation effective après encliquetage.

8. Dispositif de butée d'embrayage selon l'une quelconque des revendications précédentes, caractérisé par le fait que les zones de coincement et de dégagement (25, 30) sont pratiquées à la périphérie interne d'une partie de la bague intérieure (6) de la butée à roulement (2), la gorge de retenue (24) étant pratiquée à la périphérie externe de la pièce d'accostage (1).

9. Dispositif de butée d'embrayage selon la revendication 8, caractérisé par le fait que la périphérie externe de la pièce d'accostage (1) présente en outre une gorge de dégagement (18a) pour l'effacement des billes (23) lors du démontage.

10. Dispositif de butée d'embrayage selon les revendications 8 ou 9, caractérisé par le fait que la cage à billes (3) présente un ou plusieurs bourrelets périphériques (28) jouant le rôle de blocage axial de la cage (3) et capable de coopérer avec la gorge de retenue (24) de la pièce d'accostage (1) lors du démontage.

11. Dispositif de butée d'embrayage selon l'une quelconque des revendications 8 à 10, caractérisé par le fait que la cage à billes (3) présente un rebord d'appui axial (29) coopérant avec l'extrémité de la bague intérieure (6) de la butée à roulement (2).

12. Dispositif d'embrayage selon l'une quelconque des revendications 8 à 11, caractérisé par le fait que les moyens élastiques de maintien de la pièce d'accostage comprennent une rondelle bombée (14) jouant également le rôle de butée axiale pour limiter le déplacement axial de la butée à roulement (2) lors du montage, ladite rondelle bombée (14) étant capable d'être écrasée axialement pour permettre le démontage par effacement des billes (23) dans la gorge de dégagement (18a) de la pièce d'accostage (1).

13. Dispositif de butée d'embrayage selon l'une quelconque des revendications 1 à 7, caractérisé par le fait que les zones de coincement et de dégagement (37, 38) sont pratiquées à la périphérie interne de la pièce d'accostage (36), la gorge de retenue (35) étant pratiquée à la périphérie externe d'une partie (34) de la bague intérieure (33) de la butée à roulement (32).

14. Dispositif de butée d'embrayage selon la revendication 13, caractérisé par le fait que la cage à billes (41) présente un rebord d'appui axial (44) coopérant avec l'extrémité de la pièce d'accostage.

15. Dispositif de butée d'embrayage selon la revendication 13 ou 14, caractérisé par le fait qu'il comprend une pièce de verrouillage axial (47) pour la cage à billes (41) fixée à l'extrémité de la pièce d'accostage (36) de façon à pouvoir occuper deux positions axiales, une première position dans laquelle la cage à billes (41) peut se déplacer jusqu'à la position de solidarisation et une deuxième position dans laquelle les billes (43) de la cage à billes (41) coopèrent avec leur zone de dégagement (38).

16. Dispositif de butée d'embrayage selon la revendication 15, caractérisé par le fait que la pièce de verrouillage axial (47) de la cage à billes (41) est fixée par encliquetage élastique sur la pièce d'accostage (36) et peut passer de la première à la deuxième positions par poussée axiale.

17. Dispositif de butée d'embrayage selon la revendication 15 ou 16, caractérisé par le fait que les moyens élastiques de maintien (57) de la pièce d'accostage (36) comprennent une rondelle bombée (57) munie d'une pluralité de pattes (60) définissant ladite pièce de verrouillage axial de la cage à billes (41).

18. Ensemble permettant la réalisation d'un dispositif de butée d'embrayage selon l'une quelconque des revendications 8 à 12, caractérisé par le fait qu'il comprend une butée à roulement (2) munie d'une bague intérieure (6) présentant sur son alésage une zone de coincement (25) et une zone de dégagement (30), et une cage à billes (3) logée dans l'alésage de la bague intérieure de la butée à roulement.

19. Ensemble permettant la réalisation d'un dispositif de butée d'embrayage selon l'une quelconque des revendications 13 à 17, caractérisé par le fait qu'il comprend une pièce d'accostage (36) présentant sur son alésage une zone de coincement (37) et une zone de dégagement (38) ainsi qu'une cage à billes (41) logée dans l'alésage de la pièce d'accostage.

20. Procédé de mise en place du dispositif de butée d'embrayage selon l'une quelconque des revendications 1 à 17, caractérisé par le fait que :

— on déplace axialement relativement l'une vers l'autre la pièce d'accostage (1) et la butée à roulement (2), l'une de ces pièces portant la cage à billes (3),

— les billes (23) de la cage à billes pénètrent dans la gorge de retenue (24),

— le déplacement axial est poursuivi jusqu'à la perception d'un point dur correspondant au contact avec les moyens élastiques de butée axiale (15),

— on exerce ensuite une traction axiale sur la butée à roulement ce qui place les billes en position de solidarisation dans leur zone de coincement (25).

21. Procédé de démontage d'un dispositif de butée d'embrayage selon l'une quelconque des revendications 1 à 17, caractérisé par le fait que :

— on exerce une poussée axiale sur la butée à roulement (2) jusqu'à déplacer élastiquement les moyens élastiques de butée axiale (15), permettant ainsi aux billes (23) de la cage à billes (3) de s'effacer dans leur zone de dégagement (30),

— on exerce ensuite une traction axiale sur la butée à roulement dont la bague interne (6) se dégage de la cage à billes (3) qui reste fixée sur la pièce d'accostage (1).

## Claims

1. Clutch thrust bearing device of the traction type, comprising an engaging element (1, 36) maintained, by resilient means, in permanent contact with the clutch diaphragm (13), a roller bearing (2, 32) capable of sliding axially on a guide tube (10) under the action of a control member (11) and means for axial linkage co-operating with a retaining groove (24, 35) arranged either on the engaging element or on a member of the roller bearing, enabling the integration, by catch means, of the roller bearing and the engaging element whilst still allowing a disassembly by effacement, characterised by the fact that the linkage means comprise a ball bearing cage (3) and a plurality of ball bearings (23, 43) assembled between the engaging element and the roller bearing, capable of co-operating, in the integrated position, with a clamping zone (25, 37) and the said retaining groove (24, 35), thus ensuring an axial locking and, during the disassembly, with a disengagement zone (30, 38), the said zones of clamping and of disengagement being arranged either on the said member of the roller bearing or on the engaging element.

2. Clutch thrust bearing device according to claim 1, characterised by the fact that the ball bearing cage (3) has a plurality of seatings (22, 42) for the ball bearings (23, 43), each seating having axial dimensions greater than the diameter of the ball bearings.

3. Clutch thrust bearing device according to claim 2, characterised by the fact that each seating of the ball bearing cage comprises, for the corresponding ball bearing, two resilient retaining lugs (26, 42a) which act tauteningly on the ball bearing so as to place it in such a way that the original diameter of the assembly of ball bearings corresponds to the position of integration.

4. Clutch thrust bearing device according to any one of the preceding claims, characterised by the fact that it comprises means (15) for axial locking of the ball bearing cage during the disassembly, the ball bearings co-operating with the aforesaid disengagement zone (30, 38).

5. Clutch thrust bearing device according to any one of the preceding claims, characterised by the fact that the ball bearing cage has a chamfered peripheral zone (27) which enables the pre-centering of the ball bearing cage during the assembly.

6. Clutch thrust bearing device according to any one of the preceding claims, characterised by the fact that each clamping zone (25, 37) is constituted by a first clamping cell which is obtained by machining without removal of chips, having a radius of curvature in a radial plane greater than that of the ball bearings in the ball bearing cage, each disengagement zone (30, 38) being constituted by a second disengagement cell, obtained by machining without removal of chips and opening into the first cell and having a hollow space greater than that of this latter.

7. Clutch thrust bearing device according to any one of the claims 1 to 6, characterised by the fact that it comprises resilient axial bearing means (15) for limiting the relative axial displacement of the roller bearing and of the engaging element during the assembly, in order to enable the ball bearings to ensure effective integration after the catch-type engagement.

8. Clutch thrust bearing device according to any one of the preceding claims, characterized by the fact that the clamping and disengagement zones (25, 30) are arranged on the internal periphery of a part of the interior ring (6) of the roller bearing (2), the retaining groove (24) being arranged on the external periphery of the engaging element (1).

9. Clutch thrust bearing device according to claim 8, characterised by the fact that the external periphery of the engaging element (1) furthermore has a disengagement groove (18a) for effacing the ball bearings (23) during the disassembly.

10. Clutch thrust bearing device according to claims 8 or 9, characterised by the fact that the ball bearing cage (3) has one or several peripheral flanges (28) which play the role of axial blocking means for the cage (3) and are capable of co-operating with the retaining groove (24) of the engaging element (1) during the disassembly.

11. Clutch thrust bearing device according to any one of the claims 8 to 10, characterised by the fact that the ball bearing cage (3) has an axial support shoulder (29) co-operating with the end of the interior ring (6) of the roller bearing (2).

12. Clutch device according to any one of the claims 8 to 11, characterised by the fact that the resilient retaining means for the engaging element comprise a convex washer (14) which also plays the role of an axial bearing for limiting the axial displacement of the roller bearing (2) during the assembly, the said convex washer (14) being capable of being axially crushed so as to enable the disassembly by effacing of the ball bearings (23) in the disengagement groove (18a) of the engaging element (1).

13. Clutch thrust bearing device according to any one of the claims 1 to 7, characterised by the fact that the clamping and disengagement zones (37, 38) are arranged on the internal periphery of the engaging element (36), the retaining groove (35) being arranged on the external periphery of a part (34) of the interior ring (33) of the roller bearing (32).

14. Clutch thrust bearing device according to claim 13, characterised by the fact that the ball bearing cage (41) has an axial support shoulder (44) co-operating with the end of the engaging element.

15. Clutch thrust bearing device according to claim 13 or 14, characterised by the fact that it comprises an axial locking member (47) for the ball bearing cage (41), fixed at the end of the engaging element (36) in such a manner as to be capable of occupying two axial positions, a first position wherein the ball bearing cage (41) can become displaced into the position of integration, and a second position wherein the ball bearings (43) of the ball bearing cage (41) co-operate with their disengagement zone (38).

16. Clutch thrust bearing device according to claim 15, characterised by the fact that the axial locking member (47) of the ball bearing cage (41) is fixed by resilient catch means onto the engaging element (36), and can pass from the first to the second positions by axial thrust.

17. Clutch thrust bearing device according to claim 15 or 16, characterised by the fact that the resilient retaining means (57) of the engaging element (36) comprise a convex washer (57) provided with a plurality of lugs (60) defining the said axial locking member of the ball bearing cage (41).

18. Assembly enabling the construction of a clutch thrust bearing device according to any one of the claims 8 to 12, characterised by the fact that it comprises a roller bearing (12) provided with an interior ring (6) which has, on its bore, a clamping zone (25) and a disengagement zone (30), and a ball bearing cage (3) arranged in the bore of the interior ring of the roller bearing.

19. Assembly enabling the construction of a clutch thrust bearing device according to any one of the claims 13 to 17, characterised by the fact that it comprises an engaging element (36) which has on its bore a clamping zone (37) and a disengagement zone (38) and also a ball bearing cage (41), arranged in the bore of the engaging element.

20. Process for setting into place the clutch thrust bearing device according to any one of the claims 1 to 17, characterised by the fact that :
— the engaging element (1) and the roller bearing (2) are displaced axially, relatively towards one another, one of these members carrying the ball bearing cage (3),
— the ball bearings (23) of the ball bearing cage penetrate into the retaining groove (24),
— the axial displacement is continued until a « hard point » is perceived, which corresponds to the contact with the resilient axial bearing means (15) ;
— then an axial traction is exerted upon the roller bearing, thereby placing the ball bearings into the position of integration in their clamping zone (25).

21. Process for disassembly of a clutch thrust bearing device according to any one of the claims 1 to 17, characterised by the fact that :
— an axial thrust is exerted upon the roller bearing (2) until resilient displacement occurs of the resilient axial bearing means (15), thus enabling the ball bearings (23) of the ball bearing cage (3) to become effaced in their disengagement zone (30) ;
— then an axial traction is exerted upon the roller bearing, whose interior ring (6) becomes disengaged from the ball bearing cage (3), which remains fixed on the engaging element (1).

**Patentansprüche**

1. Zugkraftbetätigtes Kupplungslager mit einem Koppelteil (1, 36), das durch elastische Mittel in ständigem Kontakt mit der Kupplungsscheibe (13) gehalten wird, mit einem Wälzlager (2, 32), das unter der Einwirkung eines Betätigungsorgans (11) in axialer Richtung auf einem Führungsrohr (10) gleiten kann, sowie mit axialen Verbindungsmitteln, die mit einer an dem Koppelteil oder an einem Organ des Wälzlagers angebrachten Haltekehle (24, 35) zusammenwirken und eine feste gegenseitige Verbindung des Wälzlagers und des Koppelteils durch Einrasten ermöglichen, dabei jedoch ein Demontieren durch Herausziehen zulassen, dadurch gekennzeichnet, daß die Verbindungsmittel einen Kugelkäfig (3) sowie mehrere Kugel (23, 43) umfassen, die zwischen dem Koppelteil und dem Wälzlager angeordnet sind und
— in der Position der festen Verbindung mit einer Klemmzone (25, 37) und der Haltekehle (24, 35) zusammenwirken und eine axiale Verriegelung gewährleisten, und
— bei der Demontage mit einer Freigabezone (30, 38) zusammenwirken, wobei die Klemmzone und die Freigabezone entweder an dem genannten Organ des Wälzlagers oder an dem Koppelteil ausgebildet sind.

2. Kupplungslager nach Anspruch 1, dadurch gekennzeichnet, daß der Kugelkäfig (3) mehrere Sitze (22, 42) für die Kugeln (23, 43) aufweist und daß die axialen Abmessungen jedes dieser Sitze größer sind als der Durchmesser der Kugeln.

3. Kupplungslager nach Anspruch 2, dadurch gekennzeichnet, daß jeder Sitz des Kugelkäfigs zwei elastische Halteklauen (26, 42a) für die jeweilige Kugel aufweist, die die Kugeln in eine solche Position vorspannen, daß der wirksame Durchmesser aller Kugeln der Position der festen Verbindung entspricht.

4. Kupplungslager nach einem der vorhergehenden Ansprüche, gekennzeichnet durch Mittel zur axialen Blockierung des Kugelkäfigs bei der Demontage, wenn die Kugeln mit der genannten Freigabezone (18a, 36) zusammenwirken.

5. Kupplungslager nach einem der vorhergehenden Ansprüche, dadurch gekennzeichnet, daß der Kugelkäfig einen abgeschrägten Umfangsbereich (27) besitzt, der die Vorzentrierung des Kugelkäfigs bei der Montage ermöglicht.

6. Kupplungslager nach einem der vorhergehenden Ansprüche, dadurch gekennzeichnet, daß jede der Klemmzonen (25, 37) aus einer durch spanlose Bearbeitung hergestellten ersten Zelle besteht, die in einer radialen Ebene einen Krümmungsradius besitzt, der größer ist als derjenige der Kugeln des Kugelkäfigs, und daß jede Freigabezone (30, 38) von einer durch spanlose Bearbeitung hergestellten zweiten Freigabezelle gebildet ist, die in der ersten Zelle mündet, und deren Weite größer ist als die Weite der ersten Zelle.

7. Kupplungslager nach einem der Ansprüche 1 bis 6, gekennzeichnet durch elastische axiale Anschlagmittel (15) zur Begrenzung der axialen Relativbewegung des Wälzlagers und des Koppelteils bei der Montage, um den Kugel nach der Verrastung die Sicherung der gewünschten festen Verbindung zu ermöglichen.

8. Kupplungslager nach einem der vorhergehenden Ansprüche, dadurch gekennzeichnet, daß die Klemmzonen und die Freigabezonen (25, 30) am Innenumfang eines Teils des Innenrings (6) des Wälzlagers (2) ausgebildet sind und daß die Haltekehle (24) am Außenumfang des Koppelteils (1) ausgebildet ist.

9. Kupplungslager nach Anspruch 8, dadurch gekennzeichnet, daß am Außenumfang des Koppelteils (1) außerdem eine Freigabekehle (26) für das Herausziehen der Kugeln (23) bei der Demontage vorgesehen ist.

10. Kupplungslager nach einem der Ansprüche 8 oder 9, dadurch gekennzeichnet, daß der Kugelkäfig (3) eine oder mehrere umlaufende Verdickungen (28) aufweist, die bei der Demontage eine axiale Blockierung für den Kugelkäfig (3) bilden, wobei sie mit der Haltekehle (24) des Koppelteils (1) zusammenwirken.

11. Kupplungslager nach einem der Ansprüche 9 bis 10, dadurch gekennzeichnet, daß der Kugelkäfig (3) einen axialen Stützrand (29) besitzt, der mit dem Endbereich des Innenrings (6) des Wälzlagers (2) zusammenwirkt.

12. Kupplungslager nach einem der Ansprüche 8 bis 11, dadurch gekennzeichnet, daß die elastischen Mittel zur Halterung des Koppelteils eine gewölbte Scheibe (14) umfassen, die gleichzeitig einen axialen Anschlag zur Begrenzung der axialen Verschiebung des Wälzlagers (2) bei der Montage bildet und die in axialer Richtung gestaucht werden kann, um dadurch die Demontage durch Herausziehen der Kugeln (23) in die Freigabekehle (26) des Koppelteils (1) zu ermöglichen.

13. Kupplungslager nach einem der Ansprüche 1 bis 7, dadurch gekennzeichnet, daß die Klemmzonen und die Freigabezonen (37, 38) am Innenumfang des Koppelteils (36) ausgebildet sind und daß die Haltekehle (35) an dem Außenumfang an einem Teil (34) des Innenrings (33) des Wälzlagers (32) ausgebildet ist.

14. Kupplungslager nach Anspruch 13, dadurch gekennzeichnet, daß der Kugelkäfig (41) einen Rand (44) zur axialen Abstützung aufweist, der mit dem Endbereich des Koppelteils zusammenwirkt.

15. Kupplungslager nach Anspruch 14, gekennzeichnet durch ein Teil (47) zur axialen Verriegelung des Kugelkäfigs (41), das in der Weise im Endbereich des Koppelteils (36) befestigt ist, daß es zwei axiale Positionen einnehmen kann, nämlich eine erste Position, in der der Kugelkäfig (41) bis zu der Position der festen Verbindung verschiebbar ist, und eine zweite Position, in der die Kugeln (43) des Kugelkäfigs (41) mit ihrer Freigabezone (38) zusammenwirken.

16. Kupplungslager nach Anspruch 15, dadurch gekennzeichnet, daß das Teil (47) zur axialen Verriegelung des Kugelkäfigs (41) durch elastisches Einrasten an dem Koppelteil (36) befestigt ist und durch axialen Druck aus der ersten in die zweite Position überführbar ist.

17. Kupplungslager nach Anspruch 16, dadurch gekennzeichnet, daß die elastischen Mittel (57) zur Halterung des Koppelteils (36) eine gewölbte Scheibe (57) aufweisen, die mit mehreren Klauen (60) ausgestattet ist, die das Teil zur axialen Verriegelung des Kugelkäfigs (41) bilden.

18. Teilesatz zur Bildung eines Kupplungslagers nach einem der Ansprüche 8 bis 12, gekennzeichnet durch ein Wälzlager (2) mit einem Innenring (6), in dessen Bohrung eine Klemmzone (25) und eine Freigabezone (30) ausgebildet sind, sowie einen Kugelkäfig (3), der in der Bohrung des Innenrings des Wälzlagers aufgenommen ist.

19. Teilesatz zur Bildung eines Kupplungslagers nach einem der Ansprüche 13 bis 17, gekennzeichnet durch ein Koppelteil (36), das in seiner Bohrung eine Klemmzone (37) und eine Freigabezone (38) aufweist, sowie einen Kugelkäfig (41), der in der Bohrung des Koppelteils aufgenommen ist.

20. Verfahren zum Einsetzen des Kupplungslagers nach einem der Ansprüche 1 bis 17, gekennzeichnet durch folgende Schritte :

— man verschiebt das Koppelteil (1) und das Wälzlager (2) in axialer Richtung relativ gegeneinander, wobei eines dieser Teile den Kugelkäfig (3) trägt,

— die Kugeln (23) des Kugelkäfigs dringen in die Haltekehle (24) ein,

— man setzt die axiale Verschiebung fort, bis man einen harten Anschlag feststellt, der der Berührung mit den elastischen Mitteln (15) zur axialen Halterung entspricht,

— man übt anschließend eine axiale Kraft auf das Wälzlager aus, wodurch die Kugeln in ihren Klemmzone (25) in die Position der festen Verbindung gebracht werden.

21. Verfahren zum Demontieren eines Kupplungslagers nach einem der Ansprüche 1 bis 17, gekennzeichnet durch folgende Schritte :

— man übt eine axiale Druckkraft auf das Wälzlager (2) aus, bis die elastischen Mittel (15) für den axialen Anschlag eine axiale Verschiebung erfahren, die es den Kugeln (23) des Kugelkäfigs (3) ermöglicht, in ihre Freigabezone (30) herauszutreten,

— man übt anschließend eine axiale Zugkraft auf das Wälzlager aus, dessen Innenring (6) sich daraufhin von dem Kugelkäfig (3) löst, der an dem Koppelteil (1) fixiert bleibt.

FIG.1

EP 0 192 081 B1

## FIG.2

## FIG.3

## FIG.4

**FIG.5**

**FIG.6**

**FIG.7**

3

FIG.8a

FIG.8b

FIG.8c

FIG.8d

EP 0 192 081 B1

FIG.9a

FIG.9b

FIG.9c

FIG.9d

# FIG.10

FIG.11a

FIG.11b

FIG.11c

FIG.11d

FIG.12a

FIG.12b

FIG.12c

FIG.12d

EP 0 192 081 B1

FIG.13